# EUROPEAN PATENT SPECIFICATION

(11) **EP 3 225 865 B1**
(45) Date of publication and mention of the grant of the patent: **09.09.2020**
(21) Application number: 17161954.7
(22) Date of filing: 21.03.2017
(51) Int. Cl.: F16D 3/205

(54) **TRIPOD HOUSING WITH TEXTURED BALL TRACKS AND METHOD OF MANUFACTURING**
TRIPODENGEHÄUSE MIT TEXTURIERTEN KUGELLAUFBAHNEN UND HERSTELLUNGSVERFAHREN
LOGEMENTS TRIPODE AVEC CHEMINS DE ROULEMENT TEXTURÉS ET PROCÉDÉ DE FABRICATION

(30) Priority: 25.03.2016 US 201662313296 P; 30.09.2016 US 201615281714
(43) Date of publication of application: 04.10.2017
(73) Proprietor: Steering Solutions IP Holding Corporation, Saginaw, MI 48601 (US)
(72) Inventor: Miller, Jon N., Merrill, MI 48637 (US); Mondragon, Eduardo, Freeland, MI 48623 (US); Courville, Jeffrey P., Frankenmuth, MI 48734 (US)
(74) Representative: Manitz Finsterwald Patent- und Rechtsanwaltspartnerschaft mbB

(56) References cited:
- EP-A2- 3 015 730
- WO-A1-2012/172940
- WO-A1-2015/071877
- DE-T5-112004 002 352
- JP-A- S60 175 826
- JP-A- 2006 046 613
- JP-A- 2008 249 066

## Description

The present application relates to a housing for a tripod joint according to the preamble of claim 1 and to a method of manufacturing a tripod housing according to the preamble of claim 12.

### BACKGROUND OF THE INVENTION

Tripod joints, which are sometimes called "tripot joints" in the industry, interconnect rotary shaft members of a vehicle. The tripod joint includes a tripod housing that is manufactured through a forming process.

DE 11 2004 002 352 T5 discloses a tripod housing according to the preamble of claim 1 and a method according to the preamble of claim 12.

Standard and premium tripod housings are commonly manufactured through a forming process. Housings made through such a process have some disadvantages that may include classification or distortion.

Classification is an operation performed to mate the housing to a spider assembly and control clearance and the corresponding rotational lash of the resulting assembly. Classification also requires carrying an inventory of several classes.

Distortion may be present in different forms, which range from non-straight tracks or skewed bores. Such distortion induces variation in rotational lash and in the levels of Generated Axial Force (GAF) in the tripod joint. Excessive variation in GAF may be experienced by drivers in the form of shudder.

### SUMMARY OF THE INVENTION

According to an embodiment of the present disclosure, a tripod housing is provided. The tripod housing includes a housing body that extends between a first housing end and a second housing end along an axis. The housing body defines a guide channel that extends from the first housing end towards the second housing end. The guide channel has a first wall, a second wall, and a third wall that extends between the first wall and the second wall. At least one of the first wall, the second wall, and the third wall includes a selectively textured functional area.

According to another embodiment of the present disclosure, a housing is provided. The tripod housing includes a housing body having an outer surface and an inner surface each extending between a first housing end and a second housing end along an axis. The inner surface of the housing body defines a separator and a guide channel. The separator radially extends towards the axis and axially extends from the first housing end towards the second housing end.

The guide channel is disposed adjacent to the separator. The guide channel radially extends towards the outer surface and axially extends from the first housing end towards the second housing end. The guide channel has a first wall, a second wall, and a third wall extending between the first wall and the second wall. At least one of the first wall, the second wall, and the third wall includes a first selectively textured functional area.

According to yet another embodiment of the present disclosure, a method of manufacturing a tripod housing is provided. A housing body is provided. The housing body extends between a first housing end and a second housing end along an axis. A plurality of guide channels are formed into the housing body. The plurality of guide channels axially extend from the first housing end towards the second housing end. The plurality of guide channels are radially spaced apart each other about the axis. At least one of the plurality of guide channels is selectively textured to define a selectively textured functional area by a metal removing process.

These and other advantages and features will become more apparent from the following description taken in conjunction with the drawings.

### BRIEF DESCRIPTION OF THE DRAWINGS

The subject matter which is regarded as the invention is particularly pointed out and distinctly claimed in the claims at the conclusion of the specification. The foregoing and other features, and advantages of the invention are apparent from the following detailed description taken in conjunction with the accompanying drawings in which:
FIG. 1 is a perspective view of a tripod joint;
FIG. 2 is a first partial sectional view of a tripod housing of the tripod joint;
FIG. 3 is a cross-sectional view of the tripod housing of FIG. 2;
FIG. 4 is a plot illustrating generated axial force vs. joint angle;
FIG. 5 is a profile view of the tripod housing having formed guide channels without selectively textured functional areas;
FIG. 6 is a profile view of the tripod housing having formed guide channels with selectively textured functional areas; and
FIGS. 7-10 are illustrative views of a dominant lay of a selectively textured functional area of the tripod housing.

### DETAILED DESCRIPTION

Referring now to the Figures, where the invention will be described with reference to specific embodiments, without limiting same, it is to be understood that the disclosed embodiments are merely illustrative of the invention that is embodied in various and alternative forms.

The figures are not necessarily to scale; some features are exaggerated or minimized to show details of particular components. Therefore, specific structural and functional details disclosed herein are not to be interpreted as limiting, but merely as a representative basis for teaching one skilled in the art to variously employ the present invention.

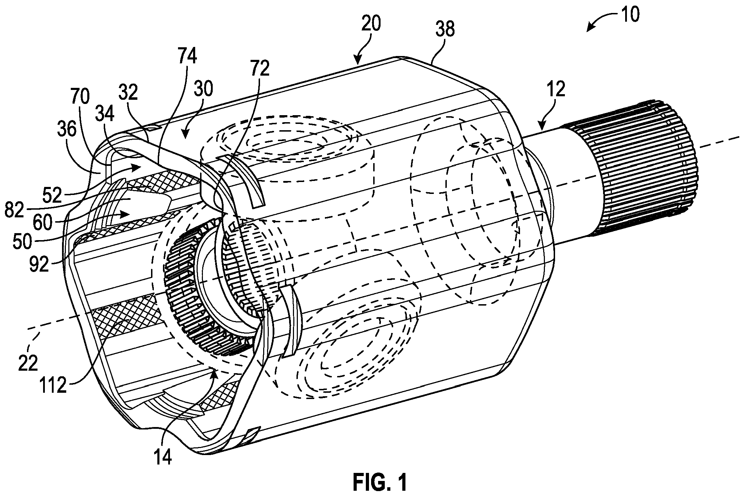

Referring to FIG. 1, a tripod joint 10 enables torque transfer between two rotatable shaft members with possible axial position or angular position changes relative to each other. The tripod joint 10 is configured to transmit torque from the first shaft member 12 to a second shaft member through a spider member 14 that is operatively connected to the second shaft member through various rotational speeds, joint angles, or telescopic positions.

The tripod joint 10 includes a tripod housing 20 that extends from the first shaft member 12 along an axis 22. The combination of the tripod housing 20 and the first shaft member 12 are rotatable about the axis 22. A direction of travel of a ball set or ball member disposed on the spider member 14 is disposed substantially parallel to the axis 22.

The tripod housing 20 includes a housing body 30. The housing body 30 has an outer surface 32 and an inner surface 34 each extending between a first housing end 36 and the second housing end 38 along the axis 22. The first shaft member 12 is connected to the housing body 30 proximate the second housing end 38.

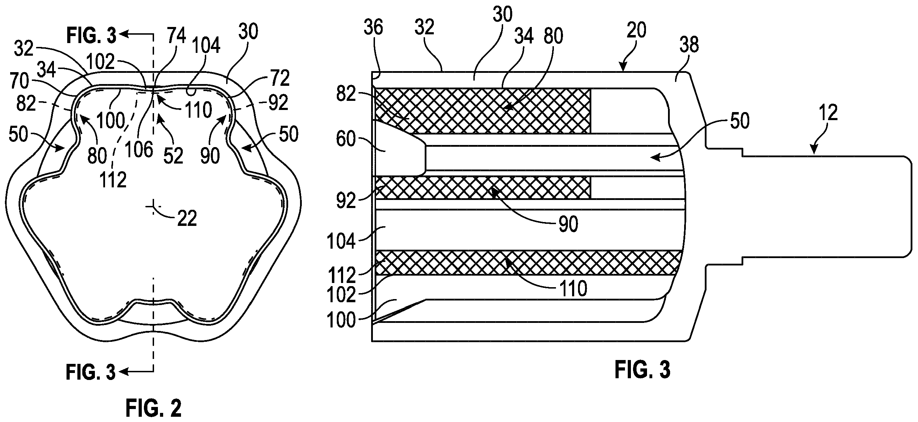

Referring to FIGS. 1 and 2, the inner surface 34 of the housing body 30 defines a separator 50 and a plurality of ball tracks, lubricated ball bores, or guide channels 52. The separator 50 radially extends from the inner surface 34 of the housing body 30 towards the axis 22. The separator 50 axially extends from the first housing and 36 towards the second housing end 38. The separator 50 defines a chamfer 60 disposed proximate the first housing end 36. The chamfer 60 extends from the inner surface 34 of the housing body 30 towards a surface of the separator 50 and is disposed in a non-perpendicular relationship with the inner surface 34 and the surface of the separator 50.

Each guide channel 52 axially extends along and is disposed substantially parallel to the axis 22. Each guide channel 52 radially extends towards the outer surface 32 of the housing body 30. The tripod joint 10 includes three guide channels that are radially spaced apart from each other about the axis 22 by a separator 50 such that each guide channel 52 is disposed adjacent to the separator 50. Each guide channel 52 is configured to receive a portion of the spider member 14 such that the spider member 14 is received within the housing body 30 of the tripod housing 20.

Each guide channel 52 of the housing includes a first wall 70, a second wall 72, and a third wall 74. The first wall 70 and the second wall 72 extend away from the axis 22 towards the third wall 74.

The first wall 70 is disposed opposite the second wall 72. The third wall 74 extends between the first wall 70 and the second wall 72. The third wall 74 is disposed further from the axis 22 than the first wall 70 and the second wall 72. The first wall 70 and the second wall 72 have a generally arcuate or a generally piecewise concave profile when viewed in a cross-section transverse to the axis 22, as shown in FIG. 2.

The first wall 70 defines a first functional area 80. The first functional area 80 extends between the separator 50 and the third wall 74. The first functional area 80 is disposed on the first wall 70 and at least a portion of the separator 50 that is disposed adjacent to the guide channel 52.

The first functional area 80 is configured to be in contact with a portion of the spider member 14 such as a ball member of a ball set disposed on the spider member 14. The first functional area 80 is selectively textured. Selectively texturing may be done by a process that enhances the surface roughness or applies a pattern that extends into, extends above, or is disposed on the surface of the first functional area 80. The selective texturing of the first functional area 80 defines a first selectively textured functional area 82. The first selectively textured functional area 82 extends from the first housing and 36 towards the second housing end 38.

The second wall 72 defines a second functional area 90. The second functional area 90 faces towards the first functional area 80. The second functional area 90 extends between another separator 50 and the third wall 74. The second functional area 90 is disposed on the second wall 72 in at least a portion of another separator 50 that is disposed adjacent to the guide channel 52.

The second functional area 90 is configured to be in contact with a portion of the spider member 14 such as a ball member of a ball set disposed on the spider member 14.

The second functional area 90 is selectively textured. Selectively texturing may be done by a process that enhances the surface roughness or applies a pattern that extends into, extends above, or is disposed on the surface of the second functional area 90. The selective texturing of the second functional area 90 defines a second selectively textured functional area 92. The second selectively textured functional area 92 extends from the first housing and 36 towards the second housing end 38.

The third wall 74 is defined by a first wall portion 100, a second wall portion 102, and a third wall portion 104. The first wall portion 100 extends between an end of the first wall 70 and the second wall portion 102. The second wall portion 102 extends between the first wall portion 100 and the third wall portion 104. The second wall portion 102 is configured as a protuberance or a protrusion 106 that extends towards the axis 22. The third wall portion 104 extends between the second wall portion 102 and an end of the second wall 72.

At least a portion of the third wall 74 defines a third functional area 110. The third functional area 110 is defined by the second wall portion 102. In at least one embodiment, the third functional area 110 may be defined by at least one of the first wall portion 100, the second wall portion 102, and the third wall portion 104..

The third functional area 110 is configured to be in contact with a portion of the spider member 14 such as a ball member of a ball set disposed on the spider member 14. The third functional area 110 is selectively textured. Selectively texturing may be done by a process that enhances the surface roughness or applies a pattern that extends into, extends above, or is disposed on the surface of the first functional area 80. The selective texturing of the third functional area 110 defines a third selectively textured functional area 112. The third selectively textured functional area 112 extends from the first housing end 36 towards the second housing end 38.

The guide channels 52 are formed into the inner surface 34 of the housing body 30 of the tripod housing 20 prior to the first functional area 80, the second functional area 90, and the third functional area 110 of the guide channels 52 being selectively textured by a metal removing process. The metal removing process may be a hard milling process, a soft milling process, a grinding process, an erosive process, an electrical discharge machining process, an electrochemical machining process, a hard broaching process, a soft broaching process, or the like. In at least one embodiment, the first functional area 80, the second functional area 90, and the third functional area 110 are selectively textured by the metal removing process subsequent to heat treating of the housing body 30 of the tripod housing 20.

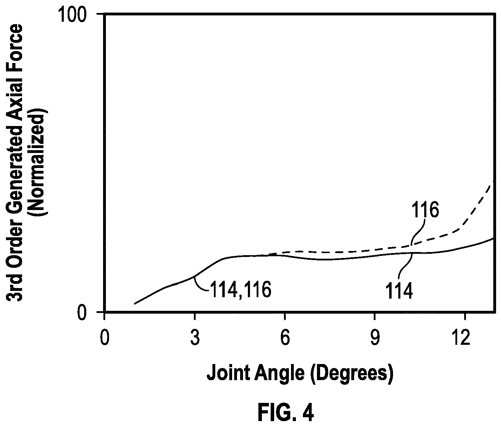

The selective texturing of the first functional area 80, the second functional area 90, and the third functional area 110 to define the first selectively textured functional area 82, the second selectively textured functional area 92, and the third selectively textured functional area 112 changes an average roughness (Ra), with respect to the average roughness resulting from forming the tripod housing 20, of the surface of at least one of the first functional area 80, the second functional area 90, and the third functional area 110 to have been average roughness (Ra) of less than 3. The selective texturing of the first functional area 80 the second functional area 90 and the third functional area 110 may improve the generated axial force (GAF) performance of the tripod joint 10. As shown in FIG. 4, as a joint angle of the tripod joint 10 increases, a generated axial force (GAF) 114 experienced by the tripod joint 10 having a tripod housing 20 provided with guide channels 52 that are formed and are provided with selectively textured functional areas (82, 92, 112) is less than a generated axial force (GAF) 116 experienced by a tripod joint having a tripod housing provided with formed channels without selectively textured functional areas.

The selective texturing of the first functional area 80, the second functional area 90, and the third functional area 110 to define the first selectively textured functional area 82, the second selectively textured functional area 92, and the third selectively textured functional area 112 provides a profile tolerance tighter than 150 microns.

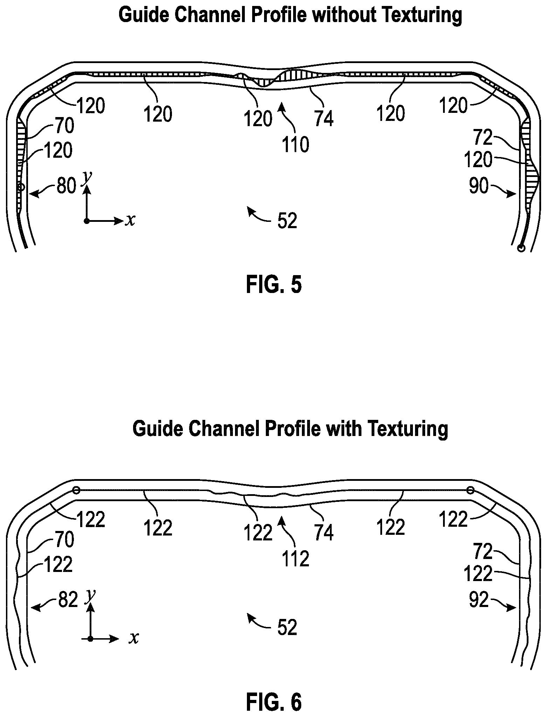

Referring to FIG. 5, a profile view of the tripod housing 20 having formed guide channels 52 without selectively textured functional areas is shown. The profile 120 varies outside of the profile tolerance of 150 microns and may negatively impact the GAF such that the GAF increases as the joint angle of the tripod joint 10 increases.

Referring to FIG. 6, another profile view of the tripod housing having formed guide channels 52 with selectively textured functional areas (82, 92, 112) is shown. The profile 122 is well controlled and is tighter than 150 microns. The tighter profile tolerances reduces the GAF as the joint angle of the tripod joint 10 increases as compared to guide channels not having selectively textured functional areas.

A ratio of the profile tolerance to the average roughness (Ra) of the selectively textured functional areas is within or between a range of 20:1 and 2000:1. The lower end of the ratio derives from a profile tolerance of approximately 50 microns and an average surface roughness of approximately 2.5. The upper end of the ratio derives from a profile tolerance of approximately 100 microns and an average surface roughness of approximately 0.05. The benefits of the selective texturing may be reduced or mitigated when a surface roughness is rougher than 2.5 microns and the profile tolerance goes beyond 100 microns.

At least one of the first selectively textured functional area 82, the second selectively textured functional area 92, and the third selectively textured functional area 112 may reduce form variation of at least one of the first functional area 80, the second functional area 90 and the third functional area 110.

At least one of the first selectively textured functional area 82, the second selectively textured functional area 92, and the third selectively textured functional area 112 are textured such that the selectively textured functional areas has a dominant lay 130. The material removal process enables the direction of the dominant lay 130 be controlled.

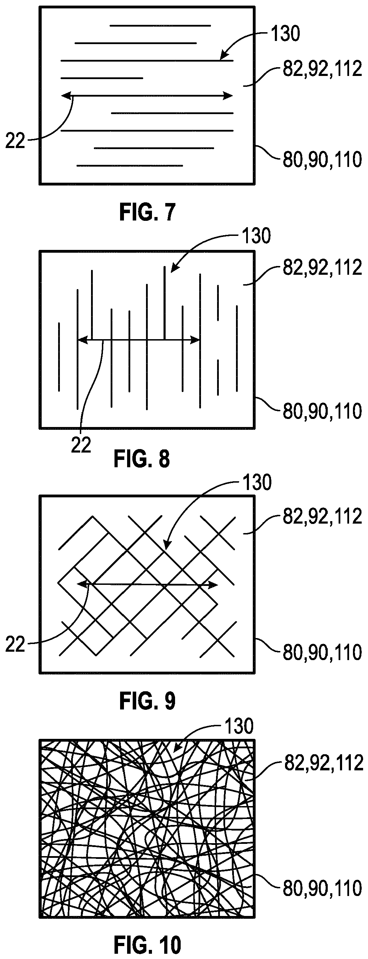

Referring to FIG. 7, the dominant lay 130 of at least one of the first selectively textured functional area 82, the second selectively textured functional area 92, and the third selectively textured functional area 112 is disposed substantially parallel to the axis 22.

Referring to FIG. 8, the dominant lay 130 of at least one of the first selectively textured functional area 82, the second selectively textured functional area 92, and the third selectively textured functional area 112 is disposed substantially perpendicular to the axis 22.

Referring to FIG. 9, the dominant lay 130 of at least one of the first selectively textured functional area 82, the second selectively textured functional area 92, and the third selectively textured functional area 112 is an angular lay such that the dominant lay 130 is disposed in a non-parallel relationship and a non-perpendicular relationship with the axis 22.

Referring to FIG. 10, the dominant lay 130 of at least one of the first selectively textured functional area 82, the second selectively textured functional area 92, and the third selectively textured functional area 112 is a multidirectional lay.

The selective texturing of at least one of the first functional area 80, the second functional area 90, and the third functional area 110 may improve traction of a ball member of the ball set disposed on the spider member 14 in a lubricated ball bore or lubricated guide channel 52 of the tripod housing 20. The selective texturing minimizes sliding, which creates friction forces several orders of magnitude higher than the friction forces associated with rolling.

The selective texturing and form controlling of at least one of the first functional area 80, the second functional area 90, and the third functional area 110 improves tracking of a ball member of the ball set disposed on the spider member 14 within the guide channel 52 of the tripod housing 20. The improved tracking reduces sliding friction and provides a more consistent generated axial force, thus reducing shuddering or other phenomenon. The selective texturing and form controlling of at least one of the first functional area 80, the second functional area 90, and the third functional area 110 may eliminate distortion during heat treating of the tripod housing 20, resulting in guide channels 52 that are symmetric having a tight form tolerance. The tighter form tolerance provides a more consistent generated axial force of the tripod joint 10. The tighter form tolerances of the tripod joint 10 having selectively textured functional areas provides a narrower generated axial force distribution than the generated axial force distribution corresponding to tripod joints having formed only housings.

Throughout this specification, the term "attach," "attachment," "connected", "coupled," "coupling," "mount," or "mounting" shall be interpreted to mean that a structural component or element is in some manner connected to or contacts another element, either directly or indirectly through at least one intervening structural element, or is integrally formed with the other structural element.

While the invention has been described in detail in connection with only a limited number of embodiments, it should be readily understood that the invention is not limited to such disclosed embodiments. Rather, the invention can be modified to incorporate any number of variations, alterations, substitutions or equivalent arrangements not heretofore described, but which are commensurate with the scope of the invention as defined by the claims. Additionally, while various embodiments of the invention have been described, it is to be understood that aspects of the invention may include only some of the described embodiments. Accordingly, the invention is not to be seen as limited by the foregoing description, but rather, by the scope of the appended claims.

## Claims

1. A tripod housing (20), comprising:
a housing body (30) extending between a first housing end (36) and a second housing end (38) along an axis (22),
the housing body (30) defining a guide channel (52) that extends from the first housing end (36) towards the second housing end (38), the guide channel (52) having a first wall (70), a second wall (72), and a third wall (74) extending between the first wall (70) and the second wall (72), wherein the housing body (30) includes a separator (50) radially extending from an inner housing body surface (34) adjacent the guide channel wall (70, 72) with a textured functional area (82, 92) and toward the axis (22), the separator (50) defining a chamfer (60) extending from the inner housing body surface (34) toward a surface of the separator (50) nearest the axis (22),
**characterized in that**
at least one of the first wall (70), the second wall (72), and the third wall (74) includes a selectively textured functional area (82, 92, 112), and the separator (50) axially extends from the first housing end (36) towards the second housing end (38).

2. The tripod housing (20) of claim 1, wherein an average roughness (Ra) of the selectively textured functional area (82, 92, 112) is less than 3.

3. The tripod housing (20) of claim 1, wherein a ratio of a profile tolerance to an average roughness (Ra) of the selectively textured functional area (82, 92, 112) is between 20:1 and 2000:1.

4. The tripod housing (20) of claim 1, wherein the selectively textured functional area (82, 92, 112) is prepared by a metal removing process.

5. The tripod housing (20) of claim 1, wherein a dominant lay (130) of the selectively textured functional area (82, 92, 112) is disposed parallel to the axis (22).

6. The tripod housing (20) of claim 1, wherein a dominant lay (130) of the selectively textured functional area (82, 92, 112) is disposed perpendicular to the axis (22).

7. The tripod housing (20) of claim 1, wherein the selectively textured functional area (82, 92, 112) has at least one of a multidirectional lay and an angular lay.

8. The tripod housing (20) of claim 1, wherein the third wall (74) is defined by a first wall portion (100), a second wall portion (102), and a third wall portion (104).

9. The tripod housing (20) of claim 8, wherein the first wall portion (100) extends between the first wall (70) and the second wall portion (102) and wherein the third wall portion (104) extends between the second wall (72) and the second wall portion (102).

10. The tripod housing (20) of claim 9, wherein the selectively textured functional area (82, 92, 112) is disposed on the second wall portion (102).

11. The tripod housing (20) of claim 10, wherein the second wall portion (102) is configured as a protrusion that extends towards the axis (22).

12. A method of manufacturing tripod the tripod housing (20) of claim 1, comprising:
providing a housing body (30) extending between a first housing end (36) and a second housing end (38) along an axis (22);
mounting a separator (50) within the housing body (30), orienting the separator to radially extend from an inner housing body surface (34) toward the axis (22), wherein the separator (50) defines a chamfer (60) extending from the inner housing body surface (34) toward a surface of the separator (50) nearest the axis (22);
forming a plurality of guide channels (52) that axially extend from the first housing end (36) towards the second housing end (38) and the plurality of guide channels (52) are radially spaced apart each other about the axis (22); and
selectively texturing at least one of the plurality of guide channels (52) to define a selectively textured functional area (82, 92, 112) by a metal removing process at a guide channel wall (70, 72) adjacent to the separator (50).

13. The method of claim 13, wherein the metal removing process is at least one of a hard milling process and a soft milling process.

14. The method of claim 13, wherein the metal removing process is at least one of a grinding process and an erosive process.

15. The method of claim 13, wherein the metal removing process is at least one of a hard broaching process and a soft broaching process.

## Patentansprüche

1. Tripodengehäuse (20), das umfasst:
einen Gehäusekörper (30), der sich zwischen einem ersten Gehäuseende (36) und einem zweiten Gehäuseende (38) entlang einer Achse (22) erstreckt,
wobei der Gehäusekörper (30) einen Führungskanal (52) definiert, der sich von dem ersten Gehäuseende (36) in Richtung des zweiten Gehäuseendes (38) erstreckt, wobei der Führungskanal (52) eine erste Wand (70), eine zweite Wand (72) und eine dritte Wand (74), die sich zwischen der ersten Wand (70) und der zweiten Wand (72) erstreckt, aufweist, wobei der Gehäusekörper (30) einen Separator (50) beinhaltet, der sich in radialer Richtung von einer Innenoberfläche (34) des Gehäusekörpers neben der Führungskanalwand (70, 72) mit einer texturierten Funktionsfläche (82, 92) und in Richtung der Achse (22) erstreckt, wobei der Separator (50) eine Schräge (60) definiert, die sich von der Innenoberfläche (34) des Gehäusekörpers in Richtung einer Oberfläche des Separators (50) erstreckt, die der Achse (22) am nächsten ist,
**dadurch gekennzeichnet, dass**
die erste Wand (70) und/oder die zweite Wand (72) und/oder die dritte Wand (74) eine selektiv texturierte Funktionsfläche (82, 92, 112) beinhaltet und sich der Separator (50) in axialer Richtung von dem ersten Gehäuseende (36) in Richtung des zweiten Gehäuseendes (38) erstreckt.

2. Tripodengehäuse (20) nach Anspruch 1, wobei eine mittlere Rauheit (Ra) der selektiv texturierten Funktionsfläche (82, 92,112) kleiner als 3 ist.

3. Tripodengehäuse (20) nach Anspruch 1, wobei ein Verhältnis einer Profiltoleranz zu einer mittleren Rauheit (Ra) der selektiv texturierten Funktionsfläche (82, 92, 112) zwischen 20:1 und 2000:1 liegt.

4. Tripodengehäuse (20) nach Anspruch 1, wobei die selektiv texturierte Funktionsfläche (82, 92, 112) durch einen Metallentfernungsprozess vorbereitet wird.

5. Tripodengehäuse (20) nach Anspruch 1, wobei eine dominante Lage (130) der selektiv texturierten Funktionsfläche (82, 92, 112) parallel zu der Achse (22) angeordnet ist.

6. Tripodengehäuse (20) nach Anspruch 1, wobei eine dominante Lage (130) der selektiv texturierten Funktionsfläche (82, 92, 112) rechtwinklig zu der Achse (22) angeordnet ist.

7. Tripodengehäuse (20) nach Anspruch 1, wobei die selektiv texturierte Funktionsfläche (82, 92, 112) eine multidirektionale Lage und/oder eine gewinkelte Lage aufweist.

8. Tripodengehäuse (20) nach Anspruch 1, wobei die dritte Wand (74) durch einen ersten Wandabschnitt (100), einen zweiten Wandabschnitt (102) und einen dritten Wandabschnitt (104) definiert ist.

9. Tripodengehäuse (20) nach Anspruch 8, wobei sich der erste Wandabschnitt (100) zwischen der ersten Wand (70) und dem zweiten Wandabschnitt (102) erstreckt und wobei sich der dritte Wandabschnitt (104) zwischen der zweiten Wand (72) und dem zweiten Wandabschnitt (102) erstreckt.

10. Tripodengehäuse (20) nach Anspruch 9, wobei die selektiv texturierte Funktionsfläche (82, 92, 112) an dem zweiten Wandabschnitt (102) angeordnet ist.

11. Tripodengehäuse (20) nach Anspruch 10, wobei der zweite Wandabschnitt (102) als Vorsprung konfiguriert ist, der sich in Richtung der Achse (22) erstreckt.

12. Verfahren zum Herstellen des Tripodengehäuses (20) nach Anspruch 1, das umfasst, dass:
ein Gehäusekörper (30) bereitgestellt wird, der sich zwischen einem ersten Gehäuseende (36) und einem zweiten Gehäuseende (38) entlang einer Achse (22) erstreckt;
ein Separator (50) in dem Gehäusekörper (30) montiert wird, der Separator so ausgerichtet wird, dass er sich in radialer Richtung von einer Innenoberfläche (34) des Gehäusekörpers in Richtung der Achse (22) erstreckt, wobei der Separator (50) eine Schräge (60) definiert, die sich von der Innenoberfläche (34) des Gehäusekörpers in Richtung einer Oberfläche des Separators (50) erstreckt, die der Achse (22) am nächsten ist;
mehrere Führungskanäle (52) ausgebildet werden, die sich in axialer Richtung von dem ersten Gehäuseende (36) in Richtung des zweiten Gehäuseendes (38) erstrecken und wobei die mehreren Führungskanäle (52) in radialer Richtung voneinander um die Achse (22) herum beanstandet sind; und
mindestens einer der mehreren Führungskanäle (52) selektiv texturiert wird, um eine selektiv texturierte Funktionsfläche (82, 92, 112) durch einen Metallentfernungsprozess an einer Führungskanalwand (70, 72) benachbart zu dem Separator (50) zu definieren.

13. Verfahren nach Anspruch 13, wobei der Metallentfernungsprozess ein Hartfräseprozess und/oder ein Weichfräseprozess ist.

14. Verfahren nach Anspruch 13, wobei der Metallentfernungsprozess ein Schleifprozess und/oder ein Erosionsprozess ist.

15. Verfahren nach Anspruch 13, wobei der Metallentfernungsprozess ein Harträumprozess und/oder ein Weichräumprozess ist.

## Revendications

1. Boîtier de tripode (20), comprenant :
un corps de boîtier (30) s'étendant entre une première extrémité de boîtier (36) et une deuxième extrémité de boîtier (38) le long d'un axe (22),
le corps de boîtier (30) définissant un canal de guidage (52) qui s'étend de la première extrémité de boîtier (36) vers la deuxième extrémité de boîtier (38), le canal de guidage (52) présentant une première paroi (70), une deuxième paroi (72) et une troisième paroi (74) s'étendant entre la première paroi (70) et la deuxième paroi (72), dans lequel le corps de boîtier (30) inclut un séparateur (50) s'étendant radialement depuis une surface intérieure de corps de boîtier (34) adjacente à la paroi de canal de guidage (70, 72) avec une zone fonctionnelle texturée (82, 92) et vers l'axe (22), le séparateur (50) définissant un chanfrein (60) s'étendant depuis la surface intérieure de corps de boîtier (34) vers une surface du séparateur (50) la plus proche de l'axe (22),
**caractérisé en ce que**
au moins une paroi parmi la première paroi (70), la deuxième paroi (72) et la troisième paroi (74) inclut une zone fonctionnelle texturée de manière sélective (82, 92, 112) et le séparateur (50) s'étend axialement depuis la première extrémité de boîtier (36) vers la deuxième extrémité de boîtier (38).

2. Boîtier de tripode (20) selon la revendication 1, dans lequel une rugosité moyenne (Ra) de la zone fonctionnelle texturée de manière sélective (82, 92, 112) est inférieure à 3.

3. Boîtier de tripode (20) selon la revendication 1, dans lequel un rapport entre une tolérance de profil et une rugosité moyenne (Ra) de la zone fonctionnelle texturée de manière sélective (82, 92, 112) est compris entre 20:1 et 2000:1.

4. Boîtier de tripode (20) selon la revendication 1, dans lequel la zone fonctionnelle texturée de manière sélective (82, 92, 112) est préparée par un processus d'enlèvement de métal.

5. Boîtier de tripode (20) selon la revendication 1, dans lequel une striure dominante (130) de la zone fonctionnelle texturée de manière sélective (82, 92, 112) est disposée parallèlement à l'axe (22).

6. Boîtier de tripode (20) selon la revendication 1, dans lequel une striure dominante (130) de la zone fonctionnelle texturée de manière sélective (82, 92, 112) est disposée perpendiculairement à l'axe (22).

7. Boîtier de tripode (20) selon la revendication 1, dans lequel la zone fonctionnelle texturée de manière sélective (82, 92, 112) présente au moins une striure parmi une striure multidirectionnelle et une striure angulaire.

8. Boîtier de tripode (20) selon la revendication 1, dans lequel la troisième paroi (74) est définie par une première partie de paroi (100), une deuxième partie de paroi (102) et une troisième partie de paroi (104).

9. Boîtier de tripode (20) selon la revendication 8, dans lequel la première partie de paroi (100) s'étend entre la première paroi (70) et la deuxième partie de paroi (102) et dans lequel la troisième partie de paroi (104) s'étend entre la deuxième paroi (72) et la deuxième partie de paroi (102).

10. Boîtier de tripode (20) selon la revendication 9, dans lequel la zone fonctionnelle texturée de manière sélective (82, 92, 112) est disposée sur la deuxième partie de paroi (102).

11. Boîtier de tripode (20) selon la revendication 10, dans lequel la deuxième partie de paroi (102) est configurée comme une saillie qui s'étend vers l'axe (22).

12. Procédé de fabrication du boîtier de tripode (20) selon la revendication 1, consistant à :
fournir un corps de boîtier (30) s'étendant entre une première extrémité de boîtier (36) et une deuxième extrémité de boîtier (38) le long d'un axe (22) ;
monter un séparateur (50) à l'intérieur du corps de boîtier (30), orienter le séparateur de façon qu'il s'étende radialement depuis une surface intérieure de corps de boîtier (34) vers l'axe (22), dans lequel le séparateur (50) définit un chanfrein (60) s'étendant depuis la surface intérieure de corps de boîtier (34) vers une surface du séparateur (50) la plus proche de l'axe (22) ;
former une pluralité de canaux de guidage (52) qui s'étendent axialement depuis la première extrémité de boîtier (36) vers la deuxième extrémité de boîtier (38), la pluralité de canaux de guidage (52) étant espacés radialement les uns des autres autour de l'axe (22) ; et
texturer de manière sélective au moins l'un de la pluralité de canaux de guidage (52) pour définir une zone fonctionnelle texturée de manière sélective (82, 92, 112) par un processus d'enlèvement de métal au niveau d'une paroi de canal de guidage (70, 72) adjacente au séparateur (50).

13. Procédé selon la revendication 13, dans lequel le processus d'enlèvement de métal est au moins un processus parmi un processus de fraisage dur et un processus de fraisage doux.

14. Procédé selon la revendication 13, dans lequel le processus d'enlèvement de métal est au moins un processus parmi un processus de meulage et un processus d'érosion.

15. Procédé selon la revendication 13, dans lequel le processus d'enlèvement de métal est au moins un processus parmi un processus de brochage dur et un processus de brochage doux.
